# EUROPÄISCHE PATENTANMELDUNG

(11) **EP 4 386 220 A1**
(43) Veröffentlichungstag der Anmeldung: **19.06.2024**
(21) Anmeldenummer: 23151110.6
(22) Anmeldetag: 11.01.2023
(51) Int. Cl.: F16B 12/16, F16B 12/20

(54) **MÖBELTEILVERBINDUNGSANORDNUNG**

(30) Priorität: 12.12.2022 EP 22212888
(71) Anmelder: Langhorst, Franz-Josef, 59555 Lippstadt (DE)
(72) Erfinder: Langhorst, Franz-Josef, 59555 Lippstadt (DE)
(74) Vertreter: Schober, Mirko

(57) **Zusammenfassung**

Bei der Möbelteilverbindungsanordnung mit einem ersten Möbelteil (6) und einem damit verbundenen zweiten Möbelteil (8) ist ein am zweiten Möbelteil (8) befestigtes Verbindungselement (4) vorgesehen. Dieses Verbindungselement (4) ist in eine in einer ersten Seite (65) des ersten Möbelteils (6) vorgesehene Öffnung (22) in einer Einschubrichtung (P1) eingeschoben und darin mittels eines im ersten Möbelteil (6) vorgesehenen Fixierelements (5) gesichert. In der ersten Seite (65) des ersten Möbelteils (6) ist eine Aufnahme (61) zur Aufnahme eines Einsatzteils (1) vorgesehen, in welche das Einsatzteil (1) eingebracht ist, wobei das Einsatzteil (1) die Öffnung (22) und das Fixierelement (5) aufweist. Das Einsatzteil (1) weist einen Grundkörper (2) und ein mit dem Grundkörper (2) über eine Schraubverbindung (23, 31) gekoppeltes, bevorzugt als Bolzen oder Mutter ausgebildetes, Distanzelement (3) auf.

## Beschreibung

Die Erfindung betrifft eine Möbelteilverbindungsanordnung nach dem Oberbegriff des Anspruchs 1.

Eine entsprechende Möbelteilverbindungsanordnung ist beispielsweise aus DE 10 2015 219 778 A1 bekannt. Grundlage dieser Möbelteilverbindungsanordnung ist die Verbindung zweier Bauteile, wobei in einem ersten Möbelteil eine Aufnahme vorgesehen ist, in welche ein Einsatzteil eingeschoben und darin fixiert wird. Dieses Einsatzteil dient dazu, einen Exzenterbolzen, der an einem weiteren Möbelteil befestigt ist, aufzunehmen und mittels eines im Einsatzteil drehbar angeordneten Exzenterbeschlags zu fixieren. Das Einsatzteil wird in der Regel in der Schmalseite eines Möbelteils, in der Regel in der Schmalseite einer Möbelplatte, in eine entsprechende Aussparung eingesetzt. Der Vorteil dieser Anordnung ist, dass im Möbelteil selbst lediglich Löcher mit kleinem Durchmesser erforderlich sind, um ein Werkzeug zum Fixieren der Verbindung einzuführen. Das bewirkt eine optische Verschönerung der Sichtseiten von Möbelteilen, weil in Sichtseiten durch die genannte Konstruktion weniger stark auftragende Öffnungen realisierbar sind. Da es toleranzbedingt immer wieder Abweichungen gibt, ist es hilfreich, die Aufnahme etwas tiefer auszuführen als das Einsatzteil in Einschubrichtung lang ist. Dadurch kann es natürlich dazu kommen, dass das Einsatzteil bei der Montage zu tief in die Aufnahme eingeschoben wird. Es ist aber wünschenswert, das Einsatzteil so in der entsprechenden Aufnahme des einen Möbelteils anzuordnen, dass seine Stirnseite mit der Schmalseite des Möbelteils bündig liegt.

Aufgabe der vorliegenden Erfindung ist es daher, eine Möbelteilverbindungsanordnung der eingangs genannten Art dahingehend weiterzuentwickeln, dass eine möglichst bündige Anordnung möglich ist.

Gelöst wird diese Aufgabe durch eine Möbelteilverbindungsanordnung mit den Merkmalen des Anspruchs 1. Vorteilhafte Ausführungsformen finden sich in den Unteransprüchen.

Erfindungsgemäß ist eine Möbelteilverbindungsanordnung mit einem ersten Möbelteil und einem damit verbundenen zweiten Möbelteil vorgesehen, bei der ein am zweiten Möbelteil befestigtes Verbindungselement vorhanden ist: Dieses ist in eine in einer ersten Seite des ersten Möbelteils vorgesehene Öffnung in einer Einschubrichtung eingeschoben und darin mittels eines im ersten Möbelteil vorgesehenen Fixerelements gesichert. In der ersten Seite des ersten Möbelteils ist zudem eine Aufnahme zur Aufnahme eines Einsatzteils vorgesehen ist, in welche das Einsatzteil eingebracht ist. Das Einsatzteil umfasst dabei die Öffnung und das Fixierelement. Erfindungsgemäß weist das Einsatzteil einen Grundkörper und ein mit dem Grundkörper über eine Schraubverbindung gekoppeltes Distanzelement auf. Das Distanzelement kann dabei direkt mit dem Grundkörper verschraubt sein oder mit einem am Grundkörper angeordneten oder daran befestigten Bauteil. Dieses ist bevorzugt als Bolzen ausgebildet. Das Distanzelement kann aber auch in Gestalt einer EinschraubMutter, insbesondere einer Rampa-Mutter, ausgeführt sein. Das Außengewinde dieser Mutter ist dann z. B. in die Aufnahme eingeschraubt. Das Innengewinde der Mutter ist dann mit einem Außengewinde am Grundkörper gekoppelt. Bevorzugt ist vorgesehen, dass das Fixierelement ein Exzentergehäuse und das Verbindungselement ein Exzenterbolzen ist. Alternativ kann es das Fixierelement beispielsweise als Fixierschraube, bevorzugt als Madenschraube ausgebildet sein. Bei dieser Ausführung ist ein die Fixierschraube aufnehmender Gewindeeinsatz mit einer Durchgangsöffnung in das Einsatzteil eingesetzt oder die Fixierschraube direkt in ein entsprechendes Gewinde im Einsatzteil eingeschraubt. Als Verbindungselement kann wiederum ein Bolzen, ähnlich einem Exzenterbolzen, verwendet werden. Wird ein Gewindeeinsatz verwendet, wird der Bolzen mit seinem Kopfteil durch die Durchgangsöffnung geführt. In dem Gewindeeinsatz oder im Einsatzteil selbst wird der Bolzen durch die Fixierschraube fixiert oder hintergriffen. Die erfindungsgemäße Möbelteilverbindungsanordnung kann allerdings auch für andere Fixierelemente bzw. Verbindungselemente ausgebildet sein. Als Material für den Grundkörper kommt bevorzugt Kunststoff, bevorzugt POM, zum Einsatz. Soll zusätzlich direkt am Grundkörper das Distanzelement angeschraubt werden, kann der Grundkörper zusätzliche Verstärkungsmaterialien aufweisen, also beispielsweise ein zumindest abschnittweise glasfaserverstärkter Kunststoff sein. Auch ist es denkbar, dass der Grundkörper aus einem Metallmaterial, bevorzugt einem metallischen Vollmaterial oder Gussmaterial, ausgebildet ist. In diesem Fall lassen sich beispielsweise erforderliche Gewinde für das Einschrauben des Distanzelementes und/oder einer ggf. vorhandenen Fixierschraube direkt in den Grundkörper einbringen.

Dieses Distanzelement löst die oben genannte Aufgabe auf einfache Art und Weise. Durch die Schraubverbindung zwischen Distanzelement und Grundkörper können beide Bauteile gegeneinander verdreht werden. Dadurch wird das Distanzelement in den Grundkörper hinein bzw. aus dem Grundkörper herausgedreht. Auf diese Weise kann erreicht werden, dass die effektive Länge des Einsatzteils veränderlich ist. Ist also die Aufnahme zum Einsetzen des Einsatzteils in dem entsprechenden Möbelbauteil zu groß, kann durch Herausdrehen des Distanzelements aus dem Grundkörper die Kombination aus Grundkörper und Distanzelement auf die exakte Länge, d. h. die exakte Tiefe, der Aufnahme eingestellt werden. So ist es also möglich, eine bündigere Anordnung von Grundkörper und Sichtseite des entsprechenden Möbelteils zu erreichen.

Bevorzugt ist dabei vorgesehen, dass das Distanzelement ein erstes Gewinde aufweist, welches mit einem in der in Einschubrichtung vorauseilenden Stirnseite des Grundkörpers vorgesehenen Gegengewinde verschraubt ist. Um eine möglichst exakte Positionierung des Grundkörpers zu erreichen, kann vorgesehen sein, dass das erste Gewinde und das Gegengewinde Feingewinde sind. Die Einstellungsmöglichkeiten sind hier besonders präzise. Das Gegengewinde kann fest im Grundkörper eingearbeitet sein, kann aber auch durch eine im Grundkörper angeordnete Gewindemutter oder Schraube gebildet werden.

Das erfindungsgemäße Distanzelement kann allerdings noch weitere Funktionen übernehmen als lediglich für die Einstellmöglichkeit des Grundkörpers zu sorgen. Es kann nämlich auch zusätzliche Verbindungsaufgaben übernehmen bzw. sogar in der Lage sein, das gesamte Einsatzteil an dem entsprechenden Möbelbauteil zu fixieren. Nach einer bevorzugten Ausführungsform ist daher vorgesehen, dass das Distanzelement einen von dem ersten Gewinde verschiedenen Verbindungsabschnitt aufweist, der dazu ausgelegt ist, von der Aufnahme oder einer in einer sich an den Innenraum der Aufnahme anschließenden Vertiefung, bevorzugt Bohrung, aufgenommen zu werden. Das Distanzelement kann dann bei der Montage in die genannte Vertiefung, die sich bevorzugt am Boden der Aufnahme befindet, eingesetzt und gegebenenfalls dort auch verankert werden, insbesondere wenn der Verbindungsabschnitt ein zweites Gewinde aufweist. Auf diese Weise lässt sich das gesamte Einsatzteil also über das Distanzelement an der Möbelplatte fixieren, bevor die eigentliche Justage hinsichtlich der Bündigkeit erfolgen kann. Das zweite Gewinde kann beispielsweise ein Gewinde mit einem Gewindegang für Holzwerkstoffe sein, sodass es sich in eine dafür vorgesehene Bohrung einschrauben lässt.

Hierzu kann insbesondere der Grundkörper oder das Distanzelement zwischen seinen beiden Enden einen Anschlag aufweisen. Dieser Anschlag dient zum einen dazu, das Eindrehen des Distanzelements in den Grundkörper zu begrenzen. Zum anderen kann so durch Drehen am Grundkörper bei Ausgestaltung des Distanzelements mit dem zweiten Gewinde die gesamte Einheit aus Grundkörper und Distanzelement in eine entsprechende Bohrung bzw. Aufnahme eingeschraubt werden.

Zur definierten Anlage des Anschlags kann der Grundkörper entsprechend ausgebildet sein. Beispielsweise kann vorgesehen sein, dass an der in Einschubrichtung vorauseilenden Stirnseite des Grundkörpers ein Vorsprung oder eine Vertiefung angeordnet ist. Der Vorsprung sollte zur Anlage des Anschlags dienen, die Vertiefung entsprechend zur Aufnahme des Anschlags geeignet sein.

Für eine vereinfachte Montage ist insbesondere von Vorteil, wenn der Grundkörper eine Hüllfläche oder Außenkontur mit kreisförmigem Querschnitt und eine Struktur, insbesondere eine Innenkontur, aufweist, die die formschlüssige Aufnahme eines Drehwerkzeugs ermöglicht. Auf diese Weise lässt sich besonders einfach am Grundkörper durch Drehbewegungen mit einem Drehwerkzeug, z. B. einem Sechskantschrauber, Torxschrauber oder dergleichen, der Grundkörper durch Drehen in der Aufnahme fixieren. Gleichzeitig dient das Drehwerkzeugs nicht nur zum Einschrauben des Einsatzteils insgesamt, sondern auch zum Justieren für die bündige Ausrichtung der nach außen weisenden Stirnseite des Grundkörpers und der Oberfläche des Möbelbauteils, welches die Aufnahme aufweist.

Die Erfindung wird nachfolgend anhand der Figuren 1 bis 15 näher erläutert.
Figur 1 zeigt eine perspektivische Ansicht des erfindungsgemäßen Einsatzteils.
Figur 2 zeigt eine perspektivische Ansicht des erfindungsgemäßen Distanzelements.
Figur 3 zeigt eine Teilansicht des Grundkörpers des erfindungsgemäßen Einsatzteils in Draufsicht.
Die Figuren 4 und 5 zeigen beispielhafte Schnittansichten durch den Grundkörper entlang der Linie A-A von Fig. 3.
Figur 6 zeigt eine Schnittansicht durch ein Möbelbauteil mit einer Aufnahme, in die ein erfindungsgemäßes Einsatzteil gemäß einer ersten erfindungsgemäßen Ausführungsform eingesetzt ist, wobei sich der Grundkörper in einer ersten Stellung befindet.
Figur 7 zeigt eine zu Fig. 6 ähnliche Schnittansicht, bei der sich der Grundkörper in einer zweiten Stellung befindet.
Figur 8 zeigt eine Schnittansicht, ähnlich zu der in den Fig. 6 und 7, nach dem Justieren des Grundkörpers in der Endlage.
Figur 9 zeigt eine zweite Ausführungsform des erfindungsgemäßen Einsatzteils in Schnittansicht.
Figur 10 zeigt eine dritte Ausführungsform des erfindungsgemäßen Einsatzteils in Schnittansicht.
Figur 11 zeigt eine vierte Ausführungsform des erfindungsgemäßen Einsatzteils in Schnittansicht.
Figur 12 zeigt eine fünfte Ausführungsform des erfindungsgemäßen Einsatzteils in Schnittansicht.
Figur 13 zeigt eine Schnittansicht durch ein Möbelbauteil mit einer Aufnahme, in die das Einsatzteil gemäß der fünften Ausführungsform eingesetzt ist.
Figur 14 zeigt den Grundkörper eines erfindungsgemäßen Einsatzteils gemäß einer sechsten Ausführungsform in Schnittansicht.
Figur 15 zeigt den Grundkörper eines erfindungsgemäßen Einsatzteils mit darin angeordneten Bolzen in einer weiteren erfindungsgemäßen Ausführungsform in Schnittansicht.

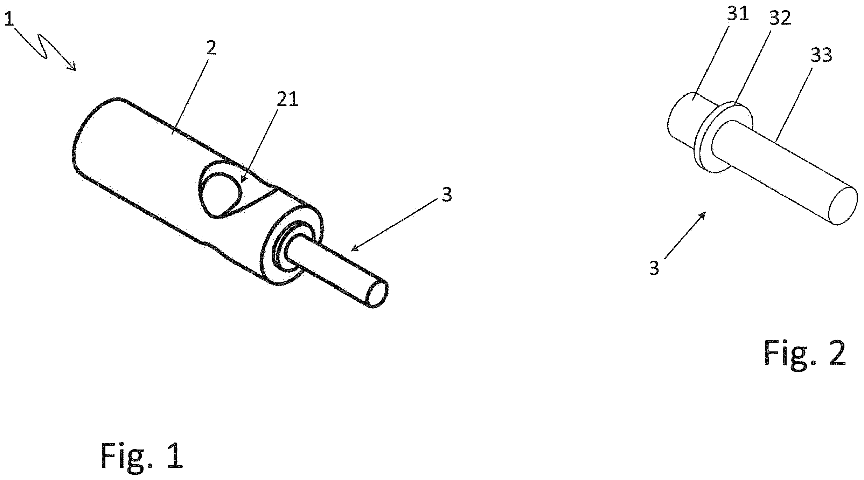

Das in der Fig. 1 gezeigte Einsatzteil 1 weist einen, bevorzugt zylindrischen, Grundkörper 2 und ein damit über eine Schraubverbindung verbundenes Distanzelement 3 auf. Zudem verfügt der Grundkörper 2 über eine Aussparung 21, in die sich ein Fixierelement (nicht gezeigt) einsetzen lässt, beispielsweise ein Exzenterbeschlag oder ein Gewindeeinsatz (nicht gezeigt), der als Fixierelement eine Fixierschraube, insbesondere Madenschraube aufnehmen kann. Im Falle einer Fixierschraube kann diese auch direkt in ein (nicht gezeigtes) Gewinde im Einsatzteil 1 eingeschraubt werden. In Fig. 2 ist eine bevorzugte Ausführungsform eines erfindungsgemäßen Distanzelements dargestellt. Bevorzugt weist dieses ein erstes Gewinde 31, bevorzugt Außengewinde, auf, mit welchem es mit einem entsprechenden Gegengewinde, bevorzugt Innengewinde, des Grundkörpers eingeschraubt werden kann. Das erste Gewinde 31 und das entsprechende Gegengewinde am Grundkörper sind bevorzugt Feingewinde. Weiter kann das Distanzelement 3, welches bevorzugt als Bolzen ausgebildet ist, einen Anschlag 32, bevorzugt wie im gezeigten Beispiel in Gestalt eines Kragens, aufweisen, mit welchem die Einschraubtiefe in den Grundkörper 2 einerseits und innerhalb der Aufnahme, in die das Einsatzteil 1 aufgenommen ist, andererseits zu begrenzen. Am dem ersten Gewinde in Bezug auf den Anschlag 32 gegenüberliegenden Bereich 33 des Distanzelements 3 kann ein zweites Gewinde ausgebildet sein, welches insbesondere geeignet ist, in eine Bohrung in einem Holzwerkstoff eingeschraubt zu werden.

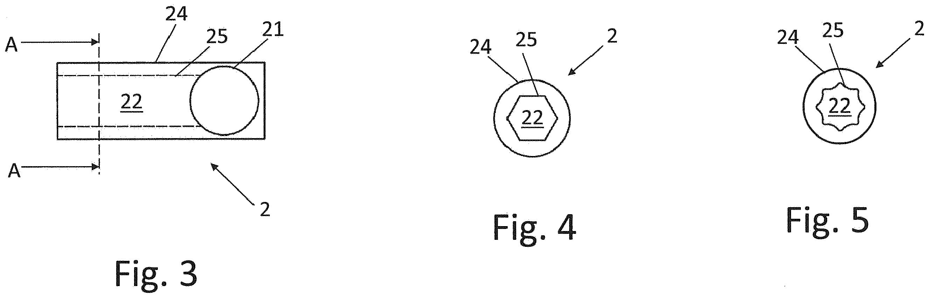

Der Grundkörper 2, von welchem ein Abschnitt in den Fig. 3 bis 5 dargestellt ist, selber ist zumindest hinsichtlich seiner Hüllfläche oder seines Querschnitts drehbar ausgebildet. Bevorzugt weist der Grundkörper 2 eine zylindrische Hüllfläche, d. h. im Querschnitt kreisförmige, bzw. eine Außenkontur 24 mit kreisförmigen Querschnitt auf. Es ist durchaus möglich, dass die Außenkontur 24 selbst nicht kreisförmig ist, sondern beispielsweise 8-eckig oder dergleichen, solange sie ermöglicht, dass sich der Grundkörper 2 in einer kreisförmigen Bohrung oder Aufnahme drehen lässt. In den Fig. 4 und 5 ist daher lediglich beispielhaft eine kreisförmige Außenkontur 24 dargestellt. Die Innenkontur 25, die die Aufnahme eines Verbindungselements, beispielsweise eines Exzenterbolzens ermöglicht, kann grundsätzlich einen beliebigen Querschnitt aufweisen. Vorteilhafterweise ist dieser Querschnitt jedoch so gestaltet, dass er mittels eines Drehwerkzeugs, beispielsweise eines Schraubendrehers gedreht werden kann. In Fig. 4 ist beispielhaft eine 6-eckige Innenkontur 25, beispielsweise zur Aufnahme eines Sechskantschraubers, dargestellt, in Fig. 5 eine Innenkontur mit einem sternförmigen Querschnitt, beispielsweise zur Aufnahme eines Torxschraubers.

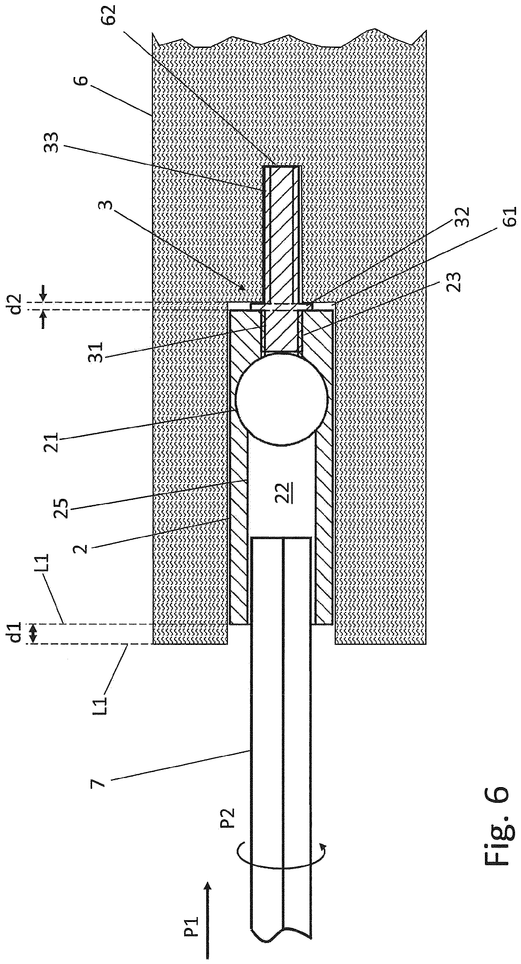

Der Einbau des erfindungsgemäßen Einsatzteils 1 in eine Möbelplatte und die Arbeitsweise der erfindungsgemäßen Möbelteilverbindungsanordnung ist in den Fig. 6 bis 8 dargestellt.

Zunächst wird das erfindungsgemäße Einsatzteil in Einschubrichtung P1 in einer Aufnahme 61 eines Möbelteils 6 eingesetzt, Fig. 6. Im gezeigten Beispiel befindet sich die Aufnahme 61 in der Schmalseite einer Möbelplatte. Die Aufnahme 61 ist bevorzugt ein kreisrundes Bohrloch, an dessen Bodenabschnitt sich eine im Querschnitt kleinere Bohrung 62 anschließt. Während die Aufnahme 61 im Wesentlichen zur Aufnahme des Grundkörpers 2 des erfindungsgemäßen Einsatzteils dient, dient die Bohrung 62 der Aufnahme des Abschnitts 33 des Distanzelements 3, bevorzugt ist der Abschnitt 33 mit einem Gewinde versehen und in den Abschnitt 62 eingeschraubt. Vorstellbar ist, dass auch der Abschnitt 62 ein entsprechendes Gegengewinde enthält, beispielsweise in Gestalt einer darin eingesetzten Mutter.

Wird also das Einsatzteil in Richtung P1 in die Aufnahme 61 eingeschoben, so stößt der Abschnitt 33 des Distanzelements 3 in die Bohrung 62. Ein Schraubwerkzeug 7 wird in den Hohlraum 22 des Grundkörpers 2 eingesetzt und in Richtung des Pfeils P2 gedreht, wobei das Werkzeug 7 formschlüssig mit der Innenkontur 25 des Grundkörpers 2 zusammen greift. Dadurch wird der Abschnitt 33 in die Bohrung 62 und der Grundkörper 2 in der Aufnahme 61 in Pfeilrichtung P1 vorangetrieben, bis der Anschlag 32 (falls vorhanden) bzw. die in Pfeilrichtung P1 vorauslaufende Stirnseite des Grundkörpers 2 gegen den Boden der Aufnahme 61 anschlägt. Wenn das Gewinde 31 des Distanzelements 3 bis zum Anschlag 32 in das Gegengewinde 23 des Grundkörpers 2 eingeschraubt ist, weist die eine Stirnseite des Grundkörpers 2 zur Außenseite des Möbelteils 6 einen Abstand d1 auf. Anders ausgedrückt, der Grundkörper 2 und die Außenseite des Möbelteils 6 liegen nicht bündig zueinander. Zwischen der vorauslaufenden Stirnseite des Grundkörpers 2 und dem Boden der Aufnahme 61 kann ein Abstand d2 vorhanden sein.

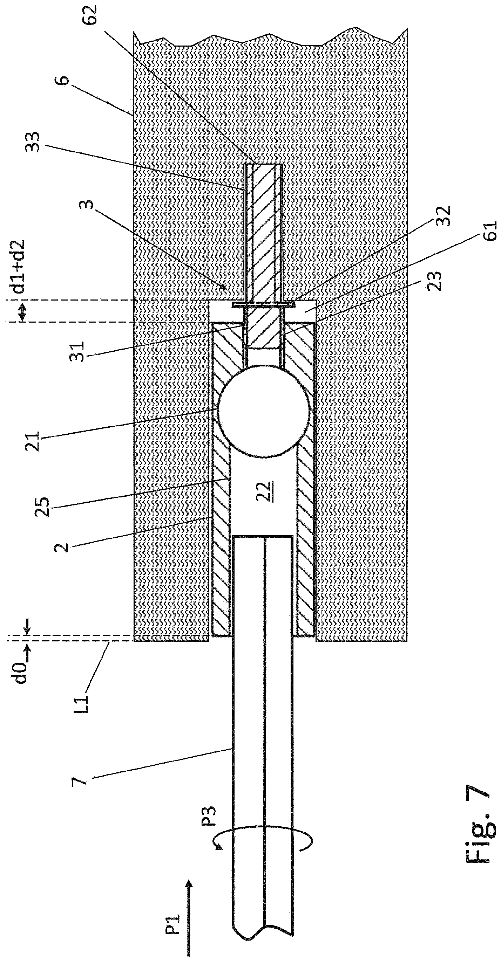

Nun wird, wie in Fig. 7 gezeigt, mittels des Werkzeugs 7, der Grundkörper in die zur Drehrichtung P2 entgegengesetzte Richtung P3 gedreht. Da der Abschnitt 33 des Distanzelements 3 in der Bohrung 62 verankert ist, zumindest kraftschlüssig oder formschlüssig darin festgelegt ist, bewegt sich lediglich der Grundkörper entgegen der Einschubrichtung P1 aufgrund der Schraubverbindung 23, 31. Es wird so lange in Richtung P3 weiter gedreht, bis ein vorgegebener Abstand d0 zwischen der Stirnseite des Grundkörpers 2 und der Außenseite des Bauteils 6 erreicht ist. Bevorzugt beträgt d0 = 0, dann liegen beide Bauteile bündig. Entsprechend vergrößert sich im Inneren der Aufnahme 61 der Abstand, der im Grundzustand d2 betragen hat, um den Betrag d1. Auf diese Weise lässt sich also der Grundkörper 2 für eine definierte Möbelverbindung entsprechend bündig mit der Außenseite des Bauteils 6 positionieren.

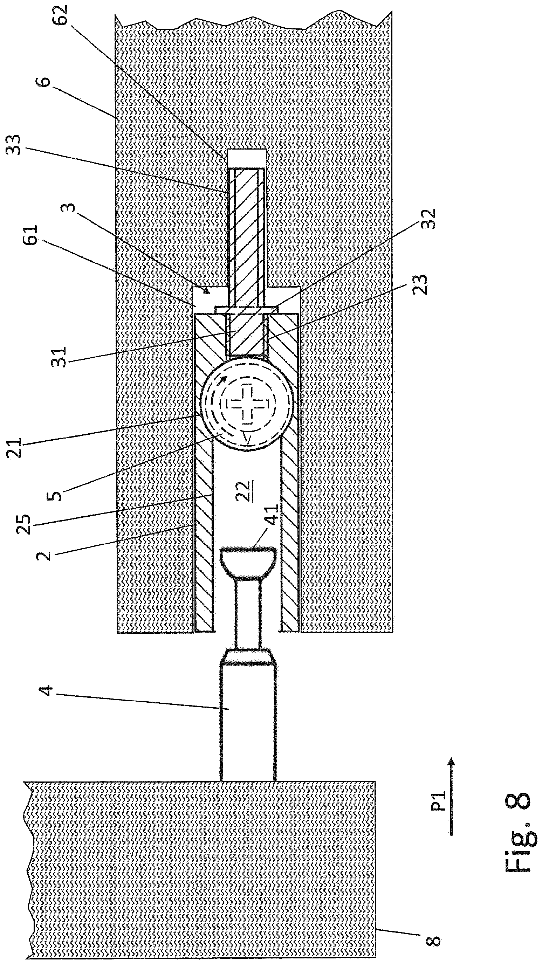

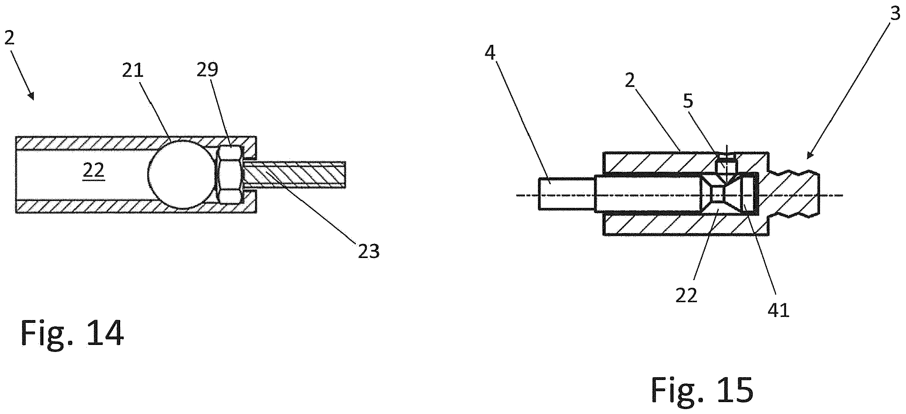

Ist der in Fig. 8 dargestellte Zustand erreicht, kann die Möbelteilverbindungsanordnung weiter installiert werden. Dazu wird ein Verbindungselement 4, welches in einem zweiten Möbelteil 8 befestigt ist und bevorzugt ein Exzenterbolzen ist, in Einschubrichtung P1 in den Innenraum 22 des Grundkörpers 2 eingeschoben. In der Aussparung 21 ist ein (in den Fig. 6 und 7 der Übersicht halber nicht gezeigter) Exzenterbeschlag 5 als Fixierelement eingesetzt, der dann in Richtung des dort angedeuteten Pfeils gedreht werden kann, um den Kopfabschnitt 41 des Exzenterbolzens zu umgreifen. Ein entsprechender Exzenterbeschlag bzw. ein entsprechendes Fixierelement 5 muss bevorzugt vor dem Einschieben des Einsatzteils in die Aussparung 61 in die entsprechende Aussparung 21 eingesetzt werden. Alternativ zum Exzenterbeschlag oder Exzentergehäuse 5 kann in die Aussparung 21 auch der oben erwähnte Gewindeeinsatz, der ein Gewinde, bevorzugt Innengewinde, aufweist, mit darin aufgenommener Fixierschraube eingesetzt sein. Anstelle des Gewindeinsatzes kann das Einsatzteil 3 selbst ein Gewinde aufweisen, in das sich die Fixierschraube einschrauben lässt. Diese Ausführungsform ist in der Ausführung gemäß Fig. 15 dargestellt. Die Drehachse der Fixierschraube kann bevorzugt senkrecht zu Zeichenebene liegen. Der Gewindeeinsatz, der sich bevorzugt in der Aussparung um eine Achse senkrecht zur Zeichenebene drehen und orientieren lässt, weist eine Durchgangsöffnung auf, die so orientiert und ausgebildet ist, dass sie das Verbindungselement aufnehmen kann. Hat das Verbindungselement 4 beipielweise die in Fig. 8 dargestellte Form, wird dieses nach Aufnahme in den Gewindeeinsatz und Festziehen der Fixierschraube durch Hintergreifen des Kopfabschnitts 41 fixiert. Vorstellbar ist aber auch, einen Bolzen 4 zu verwenden, der eine sich verjüngende Aussparung oder ein Durchgangsloch aufweist, in die bzw. das die Fixierschraube beim Einschrauben in den Gewindeeinsatz eintaucht.

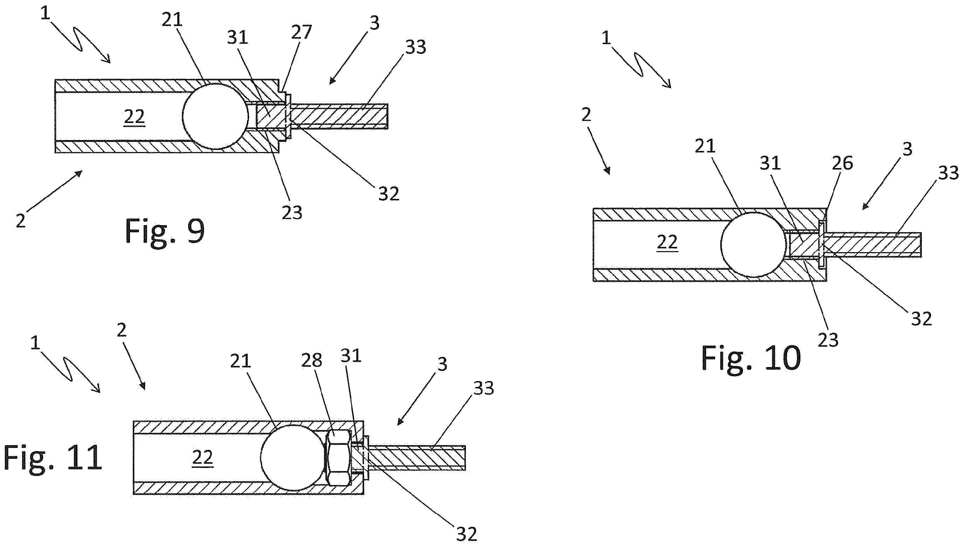

In den Fig. 9 bis 11 sind weitere Modifikationen des erfindungsgemäßen Einsatzteils 1 dargestellt. In Fig. 9 ist an der in Einschubrichtung vorauslaufenden Stirnseite ein Vorsprung 27 am Grundkörper 2 angearbeitet, an welchen der Anschlag 32 des Distanzelement 3 anliegen kann. In Fig. 10 ist an ähnlicher Stelle an der Stirnseite des Grundkörpers 2 eine entsprechende Ausnehmung 26 vorgesehen, die dafür sorgt, dass der Anschlag 32 zumindest teilweise von der Aussparung 26 aufgenommen wird, wenn das Gewinde 31 in das entsprechende Gegengewinde 23 vollständig eingedreht ist. Wie bereits erwähnt, kann das Gewinde 23, welches bevorzugt ein Innengewinde ist, direkt in einer Aufnahme des Grundkörpers 2 angeordnet sein, vorstellbar ist natürlich auch, ein separates Bauteil wie beispielsweise eine Gewindemutter 28 zu verwenden, die in den Grundkörper 2 eingesetzt ist, wie dies beispielsweise in Fig. 11 gezeigt ist.

Grundsätzlich kann gesagt werden, dass es sich bevorzugt bei dem Grundkörper 2 um ein Kunststoffteil, z. B. POM, oder auch um ein glasfaserverstärktes Kunststoffteil handelt. Die Verstärkung durch Fasern, insbesondere Glasfasern, ist besonders an den Teilen vorteilhaft, an denen ein Gewinde zur Aufnahme des Distanzelements 3 vorgesehen werden soll. Wird das Gewinde direkt am Grundkörper 2 ausgebildet, kann beispielsweise eine Gewindemutter 28 oder eine Schraube (vgl. Fig. 14) beispielsweise beim Spritzgussprozess in den Grundkörper 2 eingeformt werden.

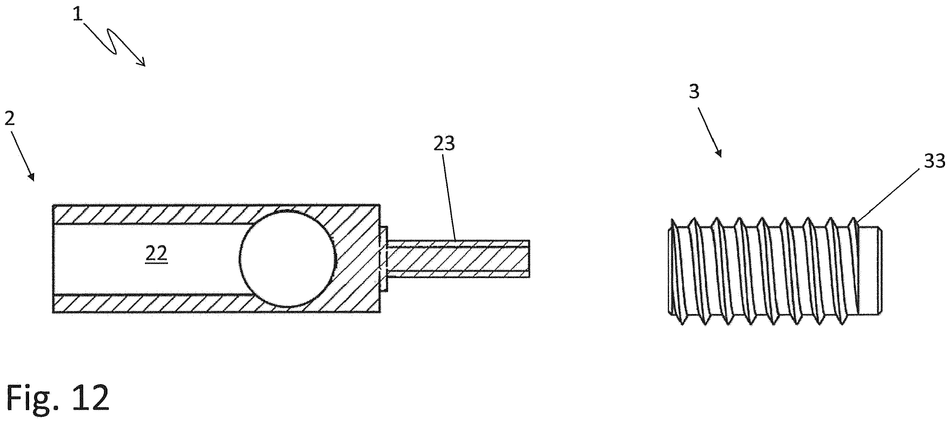

Die in Fig. 12 dargestellte weitere Ausführungsform des erfindungsgemäßen Einsatzteils 1 weist wiederum einen Grundkörper 2 auf, an welchem sich ein Gewinde 23 befindet. Das Distanzelement ist hier in Gestalt einer Einschraubmutter 3 ausgebildet, welche ein Außengewinde 33 trägt, das bevorzugt zum Einschrauben in einen Holzwerkstoff geeignet ist. Der Durchmesser der Einschraubmutter 3 kann dabei so gewählt sein, das er in etwa dem maximalen Durchmesser des Grundkörpers 2 entspricht. Auf diese Weise kann die Einschraubmutter 3 in derselben Bohrung oder Aufnahme wie der Grundkörper 2 form- oder kraftschlüssig aufgenommen werden. Natürlich ist es auch möglich, die Einschraubmutter 3 mit einem anderen Durchmesser auszubilden, dann benötigt es im Anschluss an die Aufnahme für den Grundkörper 2 eine entsprechende Bohrung mit größerem bzw. kleinerem Durchmesser. Die Einschraubmutter 3 weist ein Innengewinde auf, welches sich auf das Außengewinde 23 am Grundkörper 2 aufschrauben lässt. Bevorzugt handelt es sich bei den beiden Gewinden auch hier um Feingewinde.

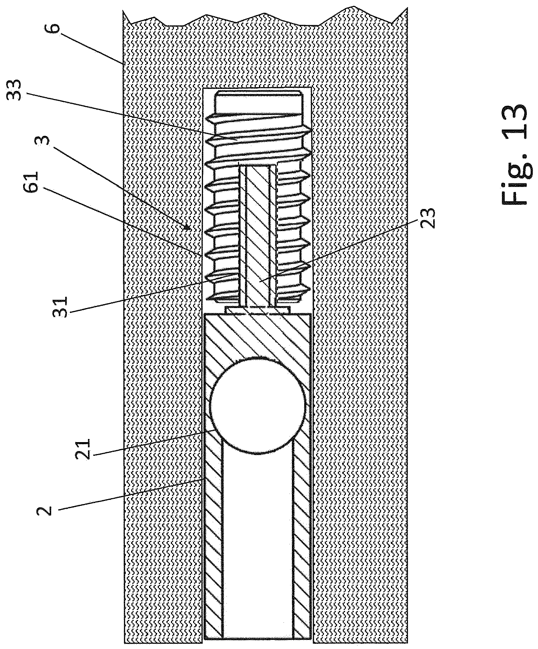

Die Einbausituation ist in Fig. 13 gezeigt. Man sieht das Gewinde 31, welches auf dem Gewinde 23 aufgeschraubt ist. In diesem Zustand wird das erfindungsgemäße Einsatzteil 2 in die Aufnahme 61 des Möbelteils 6 eingebracht und eingeschraubt. Das Justieren erfolgt genauso, wie dies mit Bezug auf die Fig. 6 und 7 zuvor erläutert worden ist, sodass zur Vermeidung von Wiederholungen auf die obigen Ausführungen verwiesen wird. Es bleibt noch zu erwähnen, dass das Gewinde 23 einstückig mit dem Grundkörper 2 ausgebildet sein kann, es kann allerdings auch als separates Bauteil in den Grundkörper 2 eingesetzt oder eingeformt sein.

Ein Ausführungsbeispiel ist in Fig. 14 dargestellt, bei welchem eine Schraube 29 in den Grundkörper 2 eingesetzt ist. Das Gewinde 23 der Schraube 29 ragt dann aus dem Grundkörper 2 heraus.

Generell ist es bei allen Ausführungsformen von Vorteil, den Grundkörper 2 aus Kunststoffmaterial auszubilden. Bevorzugt ist das Kunststoffmaterial zumindest in dem Bereich verstärkt, in welchem sich das Gewinde 23 befindet, sodass das Aufbrechen des Grundkörpers 2 beim Schraubvorgang verhindert wird. Eine Verstärkung kann z. B. auf der Grundlage des Einsatzes glasfaserverstärkter Kunststoffe erzielt werden. Bevorzugter Grundstoff für den Grundkörper 2 ist POM.

Bei der alternativen Ausführungsform gemäß Fig. 15 erkennt man eine Fixierschraube 5, die z. B. als Madenschraube ausgebildet sein kann, welche den Kopf Abschnitt 41 des Bolzens 4 hinter greift. Bevorzugt weist der Kopfabschnitt 41 dazu eine Schrägfläche auf, die dafür sorgt, dass der Kopfabschnitt in Richtung des Distanzelements 3 gezogen wird, wenn die Fixierschraube 5 angezogen wird.

Mit der vorliegenden Erfindung ist es möglich, auf sehr einfache Weise eine Justage des Grundkörpers innerhalb der in einem Möbelteil vorgesehenen Aufnahme zu erreichen und insbesondere eine bündige Ausrichtung von der Stirnseite des Grundkörpers mit der Außenseite des Möbelbauteils 6 zu erreichen. Der Grundkörper kann dabei grundsätzlich alle denkbaren Fixierelemente, nicht nur die hier beschriebenen Exzentergehäuse oder Fixierschrauben, aufweisen.

## Patentansprüche

1. Möbelteilverbindungsanordnung mit einem ersten Möbelteil (6) und einem damit verbundenen zweiten Möbelteil (8), wobei ein am zweiten Möbelteil (8) befestigtes Verbindungselement (4) vorgesehen ist, welches in eine in einer ersten Seite (65) des ersten Möbelteils (6) vorgesehene Öffnung (22) in einer Einschubrichtung (P1) eingeschoben und darin mittels eines im ersten Möbelteil (6) vorgesehenen Fixierelements (5) gesichert ist, wobei in der ersten Seite (65) des ersten Möbelteils (6) eine Aufnahme (61) zur Aufnahme eines Einsatzteils (1) vorgesehen ist, in welche das Einsatzteil (1) eingebracht ist, wobei das Einsatzteil (1) die Öffnung (22) und das Fixierelement (5) aufweist,
**dadurch gekennzeichnet,**
**dass** das Einsatzteil (1) einen Grundkörper (2) und ein mit dem Grundkörper (2) über eine Schraubverbindung (23, 31) gekoppeltes, bevorzugt als Bolzen oder Mutter ausgebildetes, Distanzelement (3) aufweist.

2. Möbelteilverbindungsanordnung nach Anspruch 1,
**dadurch gekennzeichnet,**
**dass** das Distanzelement (3) ein erstes Gewinde (31) aufweist, welches mit einem in der in Einschubrichtung (P1) vorauseilenden Stirnseite des Grundkörpers (2) vorgesehenen Gegengewinde (23) verschraubt ist.

3. Möbelteilverbindungsanordnung nach Anspruch 2,
**dadurch gekennzeichnet,**
**dass** das erste Gewinde (31) und das Gegengewinde (23) Feingewinde sind.

4. Möbelteilverbindungsanordnung nach einem der vorigen Ansprüche,
**dadurch gekennzeichnet,**
**dass** das Distanzelement (3) einen von dem ersten Gewinde (31) verschiedenen Verbindungsabschnitt (33) aufweist, der dazu ausgelegt ist, von der Aufnahme (61) oder einer in einer sich an den Innenraum (22) der Aufnahme (61) anschließenden Vertiefung, bevorzugt Bohrung (62), aufgenommen zu werden.

5. Möbelteilverbindungsanordnung nach Anspruch 4,
**dadurch gekennzeichnet,**
**dass** der Verbindungsabschnitt (33) ein zweites Gewinde aufweist.

6. Möbelteilverbindungsanordnung nach einem der vorigen Ansprüche,
**dadurch gekennzeichnet,**
**dass** das Distanzelement (3) oder der Grundkörper (2) zwischen seinen beiden Enden aufweist.

7. Möbelteilverbindungsanordnung nach einem der Ansprüche 2 bis 6,
**dadurch gekennzeichnet,**
**dass** das Gegengewinde durch eine im Grundkörper (2) angeordnete Gewindemutter (28) oder Schraube (29) ausgebildet wird.

8. Möbelteilverbindungsanordnung nach einem der vorigen Ansprüche,
**dadurch gekennzeichnet,**
**dass** an der in Einschubrichtung (P1) vorauseilenden Stirnseite des Grundkörpers (2) ein Vorsprung (27) oder eine Vertiefung (26) angeordnet ist.

9. Möbelteilverbindungsanordnung nach einem der vorigen Ansprüche,
**dadurch gekennzeichnet,**
**dass** das Fixierelement (5) ein Exzentergehäuse oder eine Fixierschraube und das Verbindungselement (4) ein Bolzen, bevorzugt ein Exzenterbolzen, ist.

10. Möbelteilverbindungsanordnung nach einem der vorigen Ansprüche,
**dadurch gekennzeichnet,**
**dass** der Grundkörper (2) eine Hüllfläche oder Außenkontur (24) mit kreisförmigem Querschnitt und eine Struktur (25), insbesondere eine Innenkontur, aufweist, die die formschlüssige Aufnahme eines Drehwerkzeugs (7) ermöglicht.

11. Möbelteilverbindungsanordnung nach einem der vorigen Ansprüche,
**dadurch gekennzeichnet,**
**dass** der Grundkörper (2) aus einem Metallmaterial, bevorzugt einem metallischen Vollmaterial oder Gussmaterial, ausgebildet ist.
